# EUROPÄISCHE PATENTANMELDUNG

(11) **EP 4 675 117 A2**
(43) Veröffentlichungstag der Anmeldung: **07.01.2026**
(21) Anmeldenummer: 25196688.3
(22) Anmeldetag: 12.05.2022
(51) Int. Cl.: F16C 13/00

(54) **KALANDER ZUR HERSTELLUNG EINES ELEKTRODENFILMS AUS EINEM PULVERFÖRMIGEN ELEKTRODENVORLÄUFERMATERIAL, ENTSPRECHENDES VERFAHREN SOWIE ENTSPRECHENDER ELEKTRODENFILM**

(30) Priorität: 04.11.2021 US 202163275857 P
(62) Teilanmeldung aus: 22726258.1
(71) Anmelder: Matthews International GmbH, 48691 Vreden (DE); Matthews International Corporation, Pittsburgh, Pennsylvania 15212 (US)
(72) Erfinder: BARTSCH, Harald, 46286 Dorsten (DE); HACKFORT, Thomas, 48683 Ahaus-Altstätte (DE)
(74) Vertreter: Holzwarth-Rochford, Andreas

(57) **Zusammenfassung**

Die Erfindung betrifft einen Kalander zur Herstellung eines Elektrodenfilms aus einem pulverförmigen Elektrodenvorläufermaterial, mit zumindest einer ersten und einer zweiten, gegenläufig zur ersten rotierenden, Quetschwalze, zwischen welchen ein Walzenspalt ausgebildet ist, wobei der Kalander dazu eingerichtet ist, das pulverförmige Elektrodenvorläufermaterial beim Hindurchführen durch den Walzenspalt mit Scherkräften zu beaufschlagen und dabei einen Elektrodenfilm auszubilden, dadurch gekennzeichnet, dass zumindest eine der ersten oder zweiten Quetschwalze zumindest eine Vorspanneinrichtung zum Vorspannen der Quetschwalze gegen einen im Walzenspalt durch den Komprimiervorgang erzeugten nichtaxialen, insbesondere radialen und/oder tangentialen, auf die jeweilige Quetschwalze wirkenden Kraftvektor aufweist, mittels welcher die Vorspannrichtung und/oder die Größe der Vorspannkraft einstellbar ist. Die Erfindung betrifft ferner ein Verfahren zum Herstellen eines eine homogene Dicke aufweisenden Elektrodenfilms aus einem pulverförmigen Elektrodenvorläufermaterial sowie einen entsprechenden Elektrodenfilm.

## Beschreibung

Die Erfindung geht aus von einem Kalander zur Herstellung eines Elektrodenfilms aus einem pulverförmigen Elektrodenvorläufermaterial, mit zumindest einer ersten und einer zweiten, gegenläufig zur ersten, rotierenden Quetschwalze, zwischen welchen ein Walzenspalt ausgebildet ist, wobei der Kalander dazu eingerichtet ist, das pulverförmige Elektrodenvorläufermaterial beim Hindurchführen durch den Walzenspalt mit Scherkräften zu beaufschlagen und dabei einen Elektrodenfilm auszubilden.

Elektroden können in elektrischen Energiespeicherzellen eingesetzt werden, die weithin zur Stromversorgung von elektronischen, elektromechanischen, elektrochemischen und anderen nützlichen Geräten verwendet werden. Zu solchen Zellen gehören Batterien wie primäre chemische Zellen und sekundäre (wiederaufladbare) Zellen, Brennstoffzellen und verschiedene Arten von Kondensatoren, einschließlich Ultrakondensatoren. Elektroden können auch in Wasseraufbereitungsanlagen eingesetzt werden. Insbesondere die Elektromobilität gewinnt unübersehbar an Zuwachs. Der Energieträger im elektrisch angetriebenen Fahrzeug, die Batterie, macht dabei einen Großteil der Kosten aus. Dies hängt unmittelbar mit der Produktion dieser zusammen. Aufgrund dessen bedarf es einer effizienten und kostengünstigen Produktion mit einem gleichzeitigen Anstieg der Energiedichte. Entscheidend dazu ist der Prozess Kalandrieren innerhalb der Prozesskette zur Herstellung von Batteriezellen wie bspw. Lithium-Ionen-Batteriezellen.

Schlüsselkomponenten für das Speicherpotenzial eines Energiespeichers sind die Elektroden. Die elektrochemischen Fähigkeiten von Elektroden, z. B. die Kapazität und der Wirkungsgrad von Batterieelektroden, werden von verschiedenen Faktoren bestimmt. Dazu gehören die Verteilung des aktiven Materials, des Bindemittels und der Zusatzstoffe, die physikalischen Eigenschaften der darin enthaltenen Materialien, wie Partikelgröße und Oberfläche des aktiven Materials, die Oberflächeneigenschaften der aktiven Materialien und die physikalischen Eigenschaften des Elektrodenfilms, wie Dichte, Porosität, Kohäsion und Haftfähigkeit an einem leitenden Element. Bei Trockenverarbeitungssystemen und -verfahren wird traditionell ein Verarbeitungsschritt mit hoher Scherung und/oder hohem Druck verwendet, um die Elektrodenfilmmaterialien aufzubrechen und zu vermischen. Solche Systeme und Verfahren können zu strukturellen Vorteilen gegenüber nass hergestellten Elektrodenfilmen beitragen. Hohen Verarbeitungsdrücke und große Anlagenabmessungen (und damit der große Platzbedarf), die für die Herstellung trockener, selbsttragender Elektrodenfilme und Trockenelektroden benötigt werden, lassen jedoch Raum für Verbesserungen.

Aus der Druckschrift US 2020 / 0 227 722 A1 ist ein Mehrwalzenkalander zur Herstellung einer Trockenelektrode für eine Energiespeichereinrichtung bekannt. Das System umfasst ein erstes Zuführsystem für Trockenelektrodenmaterial, mehrere hintereinander angeordnete Kalanderwalzen und eine Steuerung. Die Kalanderwalzen sind so angeordnet, dass diese jeweils einen Spalt zwischen sich ausbilden. Ein erster Walzenspalt ist dafür vorgesehen, dass dieser das trockene Elektrodenmaterial von dem ersten Zuführsystem für trockenes Elektrodenmaterial aufnimmt und aus dem trockenen Elektrodenmaterial einen trockenen Elektrodenfilm bildet.

Der aus dem Stand der Technik bekannte Mehrwalzenkalander weist den Nachteil auf, dass die Kalanderwalzen aufgrund der in den Walzenspalten wirkenden Kräften seitlich ausweichen können und es zu Ungenauigkeiten in der Dicke des herzustellenden Elektrodenfilms kommt bzw. es zu Vibrationen in der Anlage kommt. Das Problem verstärkt sich, je größer die Walzenbreiten und je geringer die Walzendurchmesser gewählt werden. Jedoch ist es notwendig, im Zuge einer steigenden Nachfrage nach Lithium-Ionen-Batteriezellen zur Steigerung der Anlagenproduktivität und zur Verbesserung der Elektrodenqualität unter anderem Walzen mit größeren Breiten und teilweise geringeren Durchmessern einzusetzen. Daher besteht ein Bedarf nach Lösungen, welche die oben genannten Probleme unterbinden.

Es ist daher die Aufgabe der vorliegenden Erfindung, einen Kalender derart zu verbessern, dass dieser eine höhere Prozessstabilität ermöglicht und zum Herstellen eines gleichmäßigeren Elektrodenfilms ausgebildet ist. Der erfindungsgemäße Kalander ermöglicht demnach ein vereinfachtes und kosteneffektiveres Verfahren zur Herstellung von Elektroden.

Die Aufgabe wird gelöst mit einer Vorrichtung, einem Verfahren oder einem Elektrodenfilm mit den jeweiligen Merkmalen der unabhängigen Ansprüche.

Demgemäß ist vorgesehen, dass zumindest eine der ersten oder zweiten Quetschwalze zumindest eine Vorspanneinrichtung zum Vorspannen der Quetschwalze gegen einen im Walzenspalt durch den Komprimiervorgang erzeugten nichtaxialen, insbesondere radialen und/oder tangentialen, auf die jeweilige Quetschwalze wirkenden Kraftvektor aufweist, mittels welcher die Vorspannrichtung und/oder die Größe der Vorspannkraft einstellbar ist.

Der erfindungsgemäße Kalander weist unter anderem den Vorteil auf, dass eine durch den Kalander gebildete Elektrodenbahn nicht selbsttragend sein muss, da sie zumindest während einiger, wenn nicht aller Prozessschritte auf einer Kalanderwalze positioniert und von dieser getragen werden kann. Beispielsweise kann die Elektrodenbahn während aller Prozessschritte innerhalb eines Mehrwalzen-Kalandersystems, einschließlich des Laminierungsschritts, wenn die Elektrodenbahn auf eine Metallfolie laminiert wird, um eine Elektrode zu bilden, von mindestens einer Kalanderwalze getragen werden.

Eine unter Zuhilfenahme des erfindungsgemäßen Kalanders hergestellte Energiespeichervorrichtung kann eine beliebige geeignete Konfiguration aufweisen, z. B. planar, spiralförmig gewickelt, knopfförmig, verzahnt oder als Pouch. Der Energiespeicher kann eine Komponente eines Systems sein, z. B. eines Stromerzeugungssystems, eines unterbrechungsfreien Stromquellensystems (UPS), eines photovoltaischen Stromerzeugungssystems, eines Energierückgewinnungssystems zur Verwendung in z. B. Industriemaschinen und/oder im Transportwesen. Die Energiespeichervorrichtung kann zum Betreiben verschiedener elektronischer Geräte und/oder Kraftfahrzeuge verwendet werden, einschließlich Hybrid-Elektrofahrzeugen (HEV), Plug-in-Hybrid-Elektrofahrzeugen (PHEV) und/oder Elektrofahrzeugen (EV).

Es kann vorgesehen sein, dass beide Quetschwalzen über ihre stirnseitigen Walzenzapfen jeweils in einem Maschinenrahmen gelagert sind, wobei die Vorspanneinrichtung zumindest einer Lagerung der ersten oder der zweiten Quetschwalze zugeordnet ist, wobei mittels der Vorspanneinrichtung der Walzenzapfen radial in eine beliebige Richtung und in einer einstellbaren Größenordnung bezogen auf die zumindest eine Lagerung auslenkbar ist. Die Quetschwalzen können jeweils einen mittigen Kalandrierabschnitt aufweisen, welcher gegenüber den Walzenzapfen einen größeren Durchmesser aufweist. Der Walzenspalt kann zwischen den Kalandrierabschnitten ausgebildet sein, so dass die Walzenspaltlänge der Länge der Kalandrierabschnitte entsprechen kann. Es kann vorgesehen sein, dass das pulverförmige Elektrodenvorläufermaterial gleichmäßig über die Walzenspaltlänge in den Walzenspalt gefördert wird, so dass ein Elektrodenfilm mit möglichst homogener Dickenverteilung entsteht.

Es kann insbesondere vorgesehen sein, dass die Vorspanneinrichtung einen Doppelexzenter aufweist, wobei der Doppelexzenter eine innere Exzenterbuchse und eine äußere Exzenterbuchse aufweist, welche unabhängig voneinander verdrehbar sind. Dabei kann die innere Exzenterbuchse zumindest abschnittsweise in der äußeren Exzenterbuchse aufgenommen sein. Dabei kann eine äußere Fläche der inneren Exzenterbuchse einer inneren Fläche der äußeren Exzenterbuchse gegenüberliegen. Zwischen der inneren und der äußeren Exzenterbuchse kann ein Spiel vorgesehen sein. Die innere Exzenterbuchse kann abschnittsweise aus der äußeren Exzenterbuchse herausragen. Die äußere Exzenterbuchse kann einen sich von den inneren Exzenterbuchse wegerstreckenden Abschnitt aufweisen. Die innere Exzenterbuchse kann einen Außendurchmesser aufweisen, welcher geringer ist als der Innendurchmesser der äußeren Exzenterbuchse. Die innere Exzenterbuchse kann ferner eine innere Bohrung zur Aufnahme eines Walzenzapfens aufweisen. Die Innenbohrungen der inneren und der äußeren Exzenterbuchse können bezogen auf die jeweiligen Außendurchmesser exzentrisch angeordnet sein. Die Exzentrizitäten der inneren Buchse und der äußeren Exzenterbuchse können so aufeinander abgestimmt sein, dass in einer Ausgangsposition ein in der inneren Exzenterbuchse aufgenommener Walzenzapfen mittig im Doppelexzenter aufgenommen bzw. positioniert ist. Der Kalander kann eine Vorrichtung zum axialen Verdrehen der inneren Exzenterbuchse aufweisen. Der Kalander kann ferner eine Vorrichtung zum axialen Verdrehen der äußeren Exzenterbuchse aufweisen. Dadurch können die innere und die äußere Exzenterbuchse unabhängig voneinander verdreht werden. Es kann vorgesehen sein, dass durch ein relatives Verdrehen der inneren und der äußeren Exzenterbuchse zueinander die Größenordnung des Auslenkens eingestellt werden kann. Ferner kann vorgesehen sein, dass mittels eines gemeinsamen Verdrehens beider Exzenterbuchsen gegenüber dem Lagerzapfen die Richtung der Auslenkung einstellbar ist. Der Doppelexzenter kann im Zusammenwirken mit der zugehörigen Walzenlagerung eine Biegung der Walze bewirken. Die Walzenlagerung kann weiter in Richtung Walzenmitte liegend axial beabstandet vom Doppelexzenter auf der Walze angeordnet sein.

Es ist denkbar, dass die erste oder die zweite Quetschwalze drehbar in der inneren Exzenterbuchse gelagert ist. Dabei kann sich der jeweilige Walzenzapfen zumindest abschnittsweise in die Vorspanneinrichtung bzw. die innere Exzenterbuchse hineinerstrecken.

Außerdem kann vorgesehen sein, dass die äußere Exzenterbuchse drehbar gegenüber einer im Maschinenrahmen angeordneten Bohrung gelagert ist, in welcher die Vorspanneinrichtung aufgenommen ist. Die Bohrung kann unmittelbar in den Maschinenrahmen eingebracht sein. Alternativ kann die Bohrung eine in den Maschinenrahmen eingesteckte Zylinderlaufbuchse sein. Dabei kann ein erstes Radiallager zwischen der Bohrung und der äußeren Exzenterbuchse ausgebildet oder angeordnet sein.

Außerdem kann vorgesehen sein, dass die innere Exzenterbuchse drehbar gegenüber der äußeren Exzenterbuchse gelagert ist. Dabei kann ein zweites Radiallager zwischen der äußeren Exzenterbuchse und der inneren Exzenterbuchse ausgebildet oder angeordnet sein.

Ferner kann ein drittes Radiallager zwischen der inneren Exzenterbuchse und dem Walzenzapfen ausgebildet oder angeordnet sein. Dabei können das erste und/oder das zweite und/oder das dritte Radiallager als Zylinderrollenlager oder als Nadellager ausgebildet sein.

Für das Erzeugen einer ausreichenden Presskraft im Walzenspalt und um ein Gegenlager zum Erzeugen der Vorspannkraft bereitzustellen, können angrenzend an die erste Quetschwalze eine erste Stützwalze und angrenzend an die zweite Quetschwalze eine zweite Stützwalze angeordnet sein, welche jeweils gegenläufig zu diesen rotieren. Dabei kann insbesondere vorgesehen sein, dass die Stützwalzen einen größeren Durchmesser als die erste und zweite Quetschwalze aufweisen. Beispielsweise können die Walzen einen Durchmesser von etwa 150-250 mm, bevorzugt 200 mm, und die Stützwalzen einen Durchmesser von 600-800 mm, bevorzugt 700 mm, aufweisen. Es kann vorgesehen sein, dass in einer Ausgangsposition des Doppelexzenters die Achsen der Quetschwalzen und der Stützwalzen in einer Ebene zueinander ausgerichtet sind.

Es kann vorgesehen sein. dass die erste Quetschwalze und die erste Stützwalze aufeinander abrollen und zwischen der zweiten Quetschwalze und der zweiten Stützwalze ein Walzenspalt zum Hindurchführen des Elektrodenfilms ausgebildet ist, wobei die zweite Quetschwalze zum Herumführen des Elektrodenfilms um die Ober- oder Unterseite der zweiten Quetschwalze ausgebildet ist. Dabei kann ein unmittelbarer Kontakt zwischen der ersten Stützwalze und der ersten Quetschwalze vorgesehen sein, so dass sich die erste Quetschwalze auf der ersten Stützwalze abstützen kann. Durch den vorgesehenen Walzenspalt können die zweite Quetschwalze und die zweite Stützwalze voneinander beabstandet sein. Jedoch kann sich die zweite Quetschwalze über den durch den Walzenspalt geführten Elektrodenfilm mittelbar auf der zweiten Stützwalze abstützen.

Oberhalb des Walzenspalts zwischen der ersten und der zweiten Quetschwalze kann eine Vorrichtung zum kontinuierlichen Fördern von pulverförmigem Elektrodenvorläufermaterial in den Walzenspalt angeordnet sein. Die Vorrichtung kann einen das pulverförmige Elektrodenvorläufermaterial aufnehmenden Trichter aufweisen, welcher sich über die gesamte Walzenspaltbreite erstrecken kann. Der Trichter kann an seiner Unterseite einen Förderspalt zum gezielten Fördern des Pulvers in den Walzenspalt aufweisen.

Es kann vorgesehen sein, dass zumindest eine der ersten oder zweiten Quetschwalze an ihren gegenüberliegenden Walzenzapfen jeweils eine Vorspanneinrichtung aufweist. Jedoch kann auch vorgesehen sein, dass sowohl die erste als auch die zweite Quetschwalze an ihren gegenüberliegenden Walzenzapfen jeweils eine Vorspanneinrichtung aufweisen. Dadurch können beide Quetschwalzen unabhängig voneinander oder auch gegeneinander vorgespannt werden.

Die Erfindung betrifft ferner ein Verfahren zum Herstellen eines eine homogene Dicke aufweisenden Elektrodenfilms aus einem pulverförmigen Elektrodenvorläufermaterial, aufweisend die Schritte:
Fördern von pulverförmigen Elektrodenvorläufermaterial in einen von zwei Quetschwalzen ausgebildeten Walzenspalt;
Hindurchführen des pulverförmigen Elektrodenvorläufermaterials durch den Walzenspalt, wobei das pulverförmige Elektrodenvorläufermaterial beim Hindurchführen durch den Walzenspalt mit Scherkräften beaufschlagt wird, sodass ein Elektrodenfilm ausgebildet wird;
Beaufschlagen zumindest einer der zwei Quetschwalzen mit einer Vorspannung, um einem durch das Hindurchführen des pulverförmigen Elektrodenvorläufermaterials durch den Walzenspalt auf die jeweilige Quetschwalze resultierenden Kraftvektors entgegenzuwirken.

Es kann vorgesehen sein, dass das Beaufschlagen mit einer Vorspannung das radiale Auslenken zumindest eines Walzenzapfens der jeweiligen Quetschwalze umfasst.

Ferner kann vorgesehen sein, dass das radiale Auslenken des zumindest einen Walzenzapfens das relative und/oder gleichförmige Verdrehen eines am Walzenzapfen vorgesehen Doppelexzenters umfasst. Das relative und/oder gleichförmige Verdrehen kann dabei insbesondere eine innere und eine äußere Exzenterbuchse des Doppelexzenters betreffen.

Es kann vorgesehen sein, dass das radiale Auslenken das Auslenken zweier gegenüberliegender Walzenzapfen zumindest einer der Quetschwalzen umfasst, wobei beide Walzenzapfen radial in dieselbe Richtung ausgelenkt werden. Dieselbe Richtung kann dabei bedeuten, dass beide Walzenzapfen beispielsweise nach unten ausgelenkt oder in einer Draufsicht auf die Walzenachse horizontal zu einer Seite der Walzenachse hin ausgelenkt werden.

Ferner kann vorgesehen sein, dass das radiale Auslenken das Auslenken jeweils zweier gegenüberliegender Walzenzapfen beider der Quetschwalzen umfasst, wobei die gegenüberliegenden Walzenzapfen jeweils in dieselbe Richtung ausgelenkt werden und die Walzenzapfen der ersten und der zweiten Quetschwalze in dieselbe oder in die diametral gegenüberliegende Richtung ausgelenkt werden. Beispielsweise können benachbarte Walzenzapfen beide nach unten oder oben, aufeinander zu oder voneinander weg ausgelenkt werden.

Das Verfahren kann ferner umfassen: Abstützen der beiden Quetschwalzen jeweils auf den dem Walzenspalt abgewandten Seiten der Quetschwalzen mittels einer jeweils radial auf die Quetschwalzen wirkenden Linienkraft. Die Linienkraft kann beispielsweise jeweils über an die beiden Quetschwalzen angrenzend angeordnete Stützwalzen übertragen werden.

Die Erfindung betrifft ferner einen Elektrodenfilm, welcher eine homogene Dicke aufweist, so dass die Dickenvariation des Elektrodenfilms über seine Breite nicht mehr als 10 µm beträgt, erhältlich durch Hindurchführen eines pulverförmigen Elektrodenvorläufermaterials durch einen zwischen einer ersten und einer zweiten Quetschwalze ausgebildeten Walzenspalt und im Zuge dessen Beaufschlagen des pulverförmigen Elektrodenvorläufermaterials mit Scherkräften, sodass ein Elektrodenfilm ausgebildet wird, dabei Beaufschlagen zumindest einer der Quetschwalzen mit einer Vorspannung, um einem durch das Hindurchführen des pulverförmigen Elektrodenvorläufermaterials durch den Walzenspalt auf die jeweilige Quetschwalze resultierenden Kraftvektors entgegenzuwirken.

Der Elektrodenfilm kann einer oder mehrere von einem Anodenfilm, einem Kathodenfilm, einem Separatorfilm, einem Stromabhnehmerfilm, einem Zwischenschichtfilm, einem Klebefilm, einem Grundierungsfilm oder ein Laminat aus mehreren der vorgenannten Filme sein.

Weitere Einzelheiten der Erfindung werden anhand der nachstehenden Figuren erläutert. Dabei zeigt:
- Fig. 1: eine schematische Ansicht eines Doppelexzenters zum radialen Auslenken eines Lagerzapfens;
- Fig. 2: eine schematische Ansicht einer möglichen Durchbiegung einer Walze, verursacht durch radiales Auslenken der Walzenzapfen der Walze;
- Fig. 3: eine Seitenansicht der Einbausituation zweier stirnseitig zueinander angeordneter erfindungsgemäßer Kalander;
- Fig. 4: eine perspektivische Ansicht einer Walzenausrichtung mit keiner oder unterbundener Auslenkung;
- Fig. 5A: eine Veranschaulichung des Zusammenwirkens des Doppelexzenters mit einer dadurch bewirkten horizontal nach innen gerichteten Auslenkung der Kalanderwalzen im Walzenspalt;
- Fig. 5B: eine Veranschaulichung des Zusammenwirkens des Doppelexzenters mit einer dadurch bewirkten horizontal nach außen gerichteten Auslenkung der Kalanderwalzen im Walzenspalt;
- Fig 5C: eine Veranschaulichung des Zusammenwirkens des Doppelexzenters mit einer dadurch bewirkten gegenförmigen vertikalen Auslenkung der Kalanderwalzen im Walzenspalt;
- Fig. 5D: eine Veranschaulichung des Zusammenwirkens des Doppelexzenters mit einer dadurch bewirkten gegenförmigen vertikalen Auslenkung der Kalanderwalzen im Walzenspalt;
- Fig. 6A: eine perspektivische Ansicht der Kalanderwalzen im Verbund mit an diese angrenzende Stützwalzen;
- Fig. 6B: eine perspektivische Ansicht der Kalanderwalzen im Verbund mit an diese angrenzende Stützwalzen sowie in den Walzenspalt gefördertes pulverförmiges Elektrodenvorläufermaterial bzw. ein hinter dem Walzenspalt gebildeter Elektrodenfilm;
- Fig. 7A: eine perspektivische Ansicht der Kalanderwalzen im Verbund mit an diese angrenzende Stützwalzen, wobei beide Kalanderwalzen eine aufgrund durch den Kompaktiervorgang induzierte Ausweichbiegung aufweisen, wodurch der Elektrodenfilm eine inhomogene Dickeverteilung aufweist;
- Fig. 7B: eine perspektivische Ansicht der Kalanderwalzen im Verbund mit an diese angrenzende Stützwalzen, wobei eine der Kalanderwalzen eine aufgrund durch den Kompaktiervorgang induzierte Ausweichbiegung aufweist, wodurch der Elektrodenfilm eine inhomogene Dickeverteilung aufweist;
- Fig. 8A: eine perspektivische Ansicht der Kalanderwalzen im Verbund mit an diese angrenzende Stützwalzen, wobei der Elektrodenfilm aufgrund korrekter Kalanderwalzenausrichtung eine homogene Dickeverteilung aufweist;
- Fig. 8B: eine perspektivische Ansicht der Kalanderwalzen im Verbund mit an diese angrenzende Stützwalzen, wobei der Elektrodenfilm aufgrund korrekter Kalanderwalzenausrichtung eine homogene Dickeverteilung aufweist, wobei der Elektrodenfilm um eine der Stützwalzen herumgeführt wird;
- Fig. 9A: eine beispielhafte Seitenansicht über den Vorgang der Elektrodenfilmerzeugung im erfindungsgemäßen Kalander;
- Fig. 9B: eine beispielhafte Draufsicht über den Vorgang der Elektrodenfilmerzeugung im erfindungsgemäßen Kalander;
- Fig. 10: eine perspektivische Ansicht eines in einer erfindungsgemäßen Vorspanneinrichtung gelagerten Walzenzapfens.

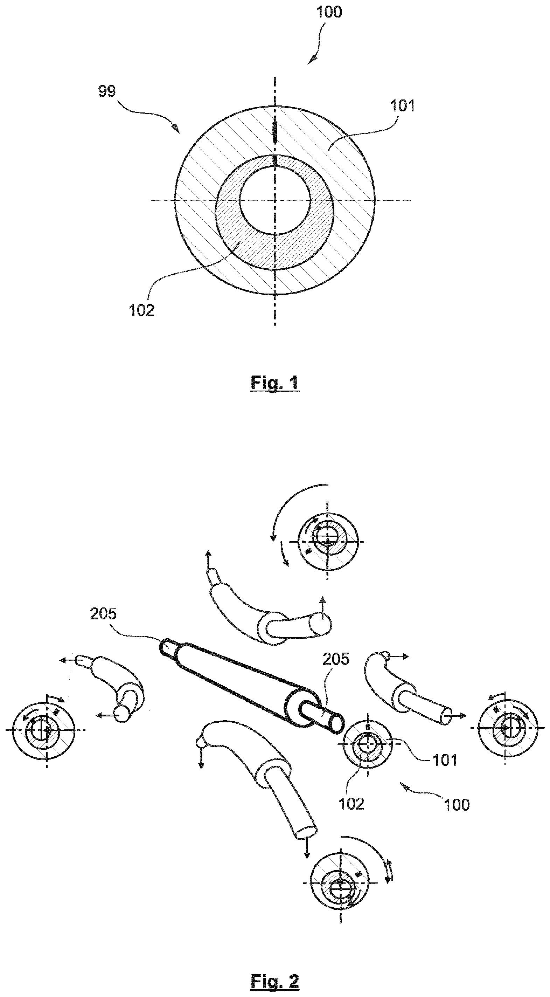

FIG. 1 zeigt einen beispielhaften Doppelexzenter 99, welcher dazu dient, eines Walzenzapfen 205 in einem beliebigen Winkel orthogonal zur Mittelachse der jeweiligen Quetschwalze 201, 202 und in einer einstellbaren Größenordnung auszulenken. Der Doppelexzenter 99 weist eine äußere Exzenterbuchse 101 auf, deren innere Bohrung exzentrisch bezogen auf den Außendurchmesser ist. Der Doppelexzenter 99 weist ferner eine innere Exzenterbuchse 102 auf, deren innere Bohrung in einer Ausgangsposition konzentrisch zum Außendurchmesser der äußeren Exzenterbuchse ist. Der Doppelexzenter 99 ist so konfiguriert, dass dieser über Auslenkung des die Vorspanneinrichtung 100 aufweisenden Walzenzapfens 205 eine Durchbiegung auf die Quetschwalze 201, 202 ausübt, so dass einer Durchbiegung der Quetschwalze durch einen im Walzenspalt durch das Elektrodenpulver erzeugten Kraftvektor F entgegengewirkt werden kann. Die innere und die äußere Exzenterbuchse 102, 103 sind relativ zueinander oder in gleicher Richtung verdrehbar, so dass die Exzentrizität der inneren Bohrung der inneren Exzenterbuchse einstellbar ist, wobei die Richtung und der Grad der Auslenkung variabel sind. Jede der Exzenterbuchsen 102, 102 weist einen dicken Abschnitt und einen dem dicken Abschnitt gegenüberliegenden dünnen Abschnitt auf. In der oben beschriebenen Ausgangsposition sind der dicke Abschnitt der äußeren Exzenterbuchse 101 und der dünne Abschnitt der inneren Exzenterbuchse 102 angenähert, sowie der dünne Abschnitt der äußeren Exzenterbuchse 101 und der dicke Abschnitt der inneren Exzenterbuchse 102 angenähert. Bei einem relativen Verdrehen beider Exzenterbuchsen 101, 102 zueinander um 180° kann dementsprechend die größtmögliche außermittige Auslenkung erzielt werden.

FIG. 2 veranschaulicht die mögliche Durchbiegung einer an beiden gegenüberliegenden Walzenzapfen 205 jeweils eine Vorspanneinrichtung 100 aufweisenden Quetschwalze 201, die durch die Drehung Exzenterbuchsen 101, 102 in Bezug auf deren Ausgangsposition erzielt werden kann. Dies beinhaltet die Darstellung der Drehung der Exzenterbuchsen 101, 102, die zu einer Auslenkung der Walzenzapfen 205 vertikal nach unten führt, die Drehung der Exzenterbuchsen 101, 102, die zu einer Auslenkung der Walzenzapfen 205 horizontal nach links führt, die Drehung der Exzenterbuchsen 101, 102, die zu einer Auslenkung der Walzenzapfen 205 vertikal nach oben führt, sowie die Drehung der Exzenterbuchsen 101, 102, die zu einer Auslenkung der Walzenzapfen 205 horizontal nach rechts führt. Dabei ist jeweils die zugehörige Verdrehrichtung der inneren Exzenterbuchse und der äußeren Exzenterbuche dargestellt. Beispielsweise wird für eine Auslenkung der Walzenzapfen 205 vertikal nach oben die äußere Exzenterbuchse 101 gemeinsam mit der inneren Exzenterbuchse 102 zunächst wie dargestellt um etwa 120° gegen den Uhrzeigersinn verdreht und die innere Exzenterbuchse 102 anschließend relativ zur äußeren Exzenterbuchse 101 um etwa 90° im Uhrzeigersinn zurückgedreht. Die weiteren Auslenkpositionen werden in entsprechender Weise eingestellt, wie durch die gezeigten Pfeilrichtungen jeweils verdeutlicht.

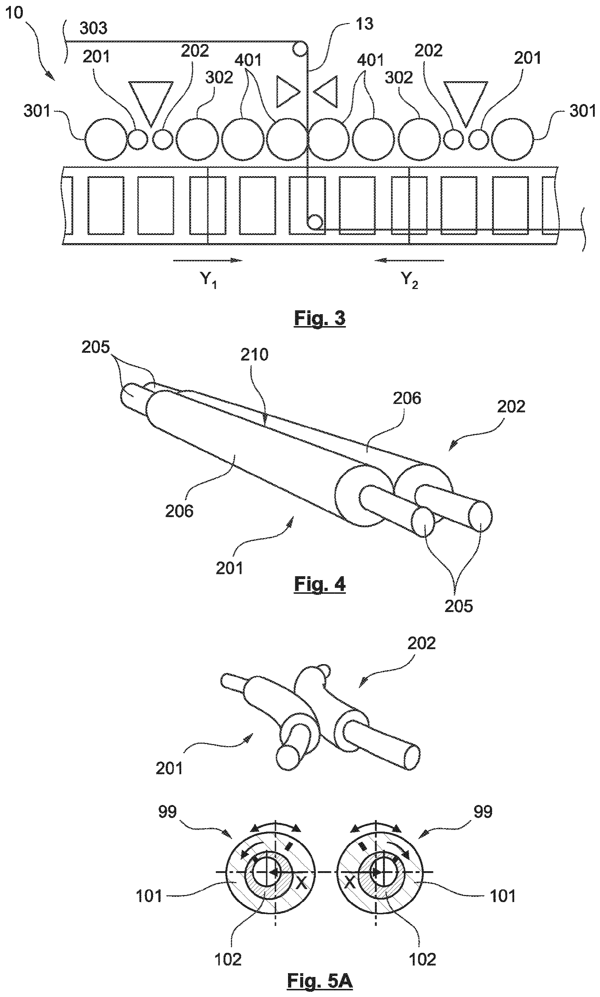

Fig. 3 zeigt eine Seitenansicht eines Kalanders 10, welcher die Anordnung der Walzen 201, 202 in Bezug auf die Stützrollen 301, 302 in dem integrierten Walzsystem gemäß einer Ausführungsform zeigt. Der Kalander 10 dient zum Herstellen einer beidseitig mit Elektrodenfilmen 613 beschichteten Separatorfolie 303. Die Anordnung 2 weist zwei stirnseitig aneinanderpositionierte Kalanderanordnungen auf, welche gegenläufige Hauptförderrichtungen Y1, Y2 aufweisen. Die Kalanderanordnungen weisen jeweils sechs Walzen 301, 201, 202, 302, 401 auf, wobei jeweils die eingangsseitige Endwalze 301 als unmittelbar auf der ersten Quetschwalze 201 abrollende Stützwalze 301 ausgebildet ist und die ausgangsseitigen Endwalzen einen gemeinsamen Endwalzenspalt 13 ausbilden. Vertikal von oben wird dem Endwalzenspalt 13 eine Separatorfolie 303 zugeführt, welche mittels den in den beiden Kalanderanordnungen hergestellten Elektrodenfilmen 613 beidseitig beschichtet wird, so dass die beschichtete Separatorfolie 303 den Endwalzenspalt 13 vertikal nach unten verlässt und im Anschluss abgelängt und/oder aufgerollt bzw. weiterverarbeitet werden kann.

FIG. 4 zeigt die Ausrichtung der Quetschwalzen 201, 202 ohne Auslenkung, so dass dementsprechend eine oder mehrere an den Quetschwalzen 201 ,202 vorgesehene Vorspanneinrichtungen 100 in ihrer Ausgangsposition stehen. Diese Ausrichtung umfasst eine Quetschwalze 201, die neben und parallel zu einer zweiten Quetschwalze 202 positioniert ist.

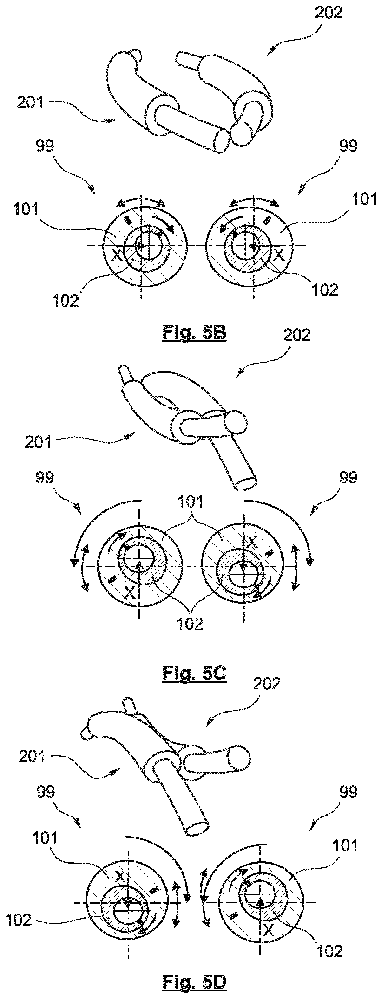

FIG. 5A-5D zeigen das Zusammenwirken der inneren und äußeren Exzenterbuchsen 102, 202 auf den Quetschwalzen 201, 202 bei der Ausrichtung der Auslenkung der Quetschwalzen gegen einen im Walzenspalt 210 wirkenden Kraftvektor F. FIG. 5A zeigt eine Quetschwalze 201 in Ausrichtung mit einer zweiten Quetschwalze 202, wobei die Exzenterbuchsen 102, 102 der ersten Quetschwalze 201 so ausgerichtet sind, dass sie eine Auslenkung der Walzenzapfen 205 horizontal nach links und damit eine Walzendurchbiegung horizontal nach rechts erzeugen, und die Exzenterbuchsen 102, 102 der zweiten Quetschwalze 202 so ausgerichtet sind, dass sie eine Auslenkung der Walzenzapfen 205 horizontal nach rechts und damit eine Walzendurchbiegung horizontal nach links erzeugen. FIG. 5B zeigt eine Quetschwalze 201 in Ausrichtung mit einer zweiten Quetschwalze 202, wobei die Exzenterbuchsen 102, 102 der ersten Quetschwalze 201 so ausgerichtet sind, dass sie eine Auslenkung der Walzenzapfen 205 horizontal nach rechts und damit eine Walzendurchbiegung horizontal nach links erzeugen, und die Exzenterbuchsen 102, 102 der zweiten Quetschwalze 202 so ausgerichtet sind, dass sie eine Auslenkung der Walzenzapfen 205 horizontal nach links und damit eine Walzendurchbiegung horizontal nach rechts erzeugen. FIG. 5C zeigt eine Quetschwalze 201 in Ausrichtung mit einer zweiten Quetschwalze 202, wobei die Exzenterbuchsen 102, 102 der ersten Quetschwalze 201 so ausgerichtet sind, dass sie eine Auslenkung der Walzenzapfen 205 vertikal nach oben und damit eine Walzendurchbiegung vertikal nach unten erzeugen, und die Exzenterbuchsen 102, 102 der zweiten Quetschwalze 202 so ausgerichtet sind, dass sie eine Auslenkung der Walzenzapfen 205 vertikal nach unten und damit eine Walzendurchbiegung vertikal nach oben erzeugen. FIG. 5D zeigt eine Quetschwalze 201 in Ausrichtung mit einer zweiten Quetschwalze 202, wobei die Exzenterbuchsen 102, 102 der ersten Quetschwalze 201 so ausgerichtet sind, dass sie eine Auslenkung der Walzenzapfen 205 vertikal nach unten und damit eine Walzendurchbiegung vertikal nach oben erzeugen, und die Exzenterbuchsen 102, 102 der zweiten Quetschwalze 202 so ausgerichtet sind, dass sie eine Auslenkung der Walzenzapfen 205 vertikal nach oben und damit eine Walzendurchbiegung vertikal nach unten erzeugen.

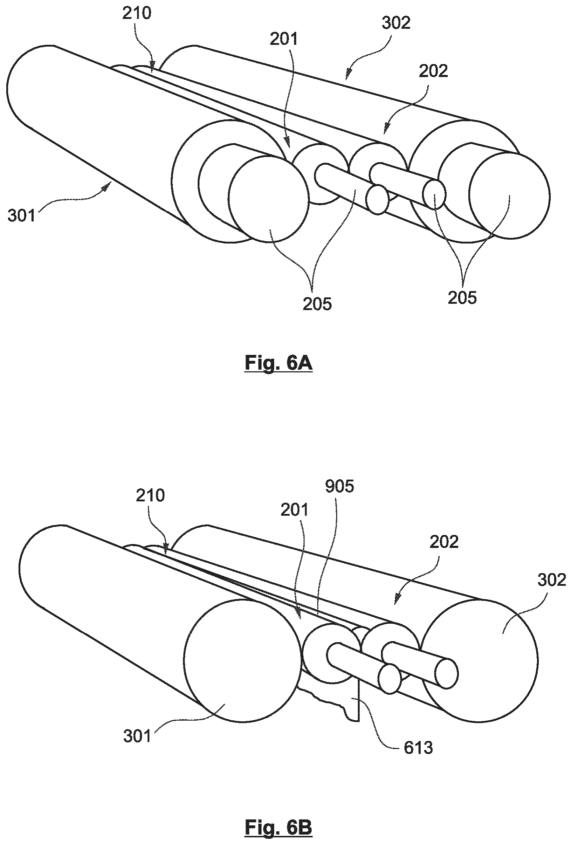

Die FIG. 6A-6B zeigen die Ausrichtung der Quetschwalzen 201, 202 mit den Stützwalzen 301, 302 und die Verwendung der Walzen zur Erzeugung eines Elektrodenfilms 613. Dazu gehört eine Anordnung von nebeneinander angeordneten Walzen, einschließlich, von links nach rechts, einer ersten Stützwalze 301, einer ersten Quetschwalze 201, einer zweiten Quetschwalze 202 und einer zweiten Stützwalze 302, die alle aufeinander ausgerichtet sind. Das pulverförmige Elektrodenvorläufermaterial 905 wird von oben in einen Walzenspalt 210 zwischen den beiden Quetschwalzen 201, 202 gegeben und in diesem zu einem Elektrodenfilm 613 geformt, welcher den Walzenspalt 210 an der Unterseite der Quetschwalzen 201, 202 verlässt.

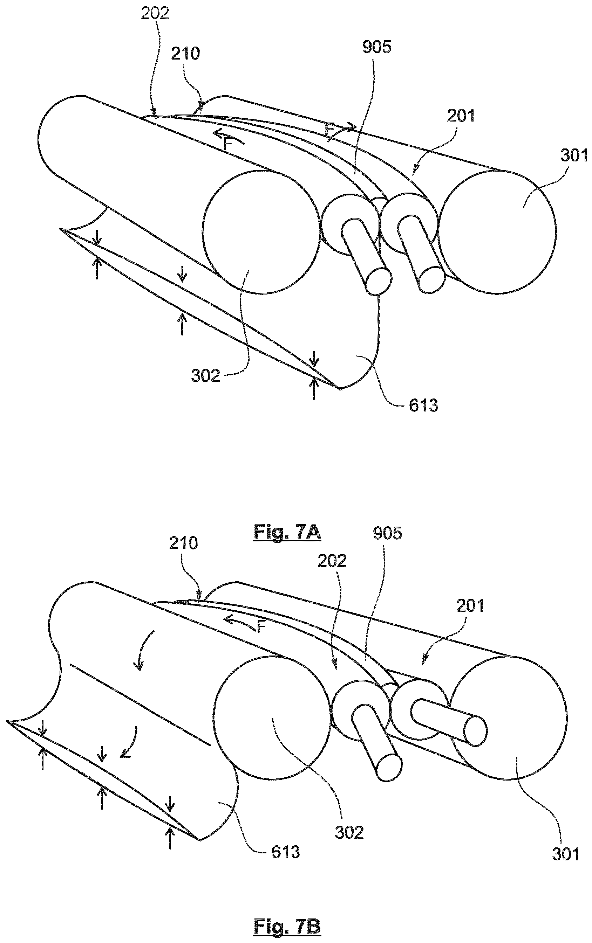

Die FIG. 7A-7B zeigen die unzulässige Dickentoleranz, die durch die Durchbiegung der Quetschwalzen 201, 202 entsteht, wenn diese nicht durch die erfindungsgemäße Vorspanneinrichtung 100 vorgespannt sind. Durch die durch das Fördern des Elektrodenpulvers 905 durch den Walzenspalt 210 entstehenden Presskräfte im Walzenspalt 210 erfahren die Quetschwalzen 201, 202 eine Durchbiegung nach oben bzw. weichen diese den Presskräften aus. Dies führt zur Erzeugung eines Elektrodenfilms 613 mit einer unzulässigen Dickentoleranz, wobei die Dicke des Films insbesondere zur Mitte hin zunehmen kann. Wie in FIG. 7B dargestellt kann das Ausweichverhalten der Quetschwalzen 201, 202 auch asymmetrisch erfolgen, so dass nur eine der Quetschwalzen 201, 202 oder diese in unterschiedlichem Maße ausgelenkt werden. Im gezeigten Beispiel weicht nur die zweite Quetschwalze 202 nach oben aus, während die erste Quetschwalze 201 keine Durchbiegung erfährt. Dies liegt daran, dass zwischen der ersten Quetschwalze 201 und der ersten Stützwalze 301 aufgrund des direkten Kontakts eine höhere Reibung vorliegt, während die Reibung der zweiten Quetschwalze 202 und dem Elektrodenfilm 613 geringer ist.

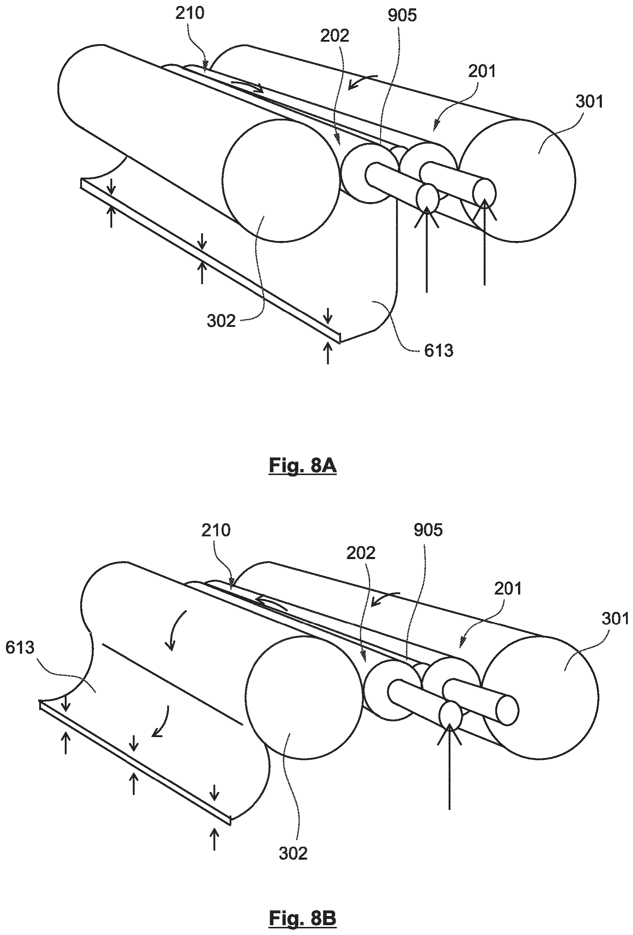

Die FIG. 8A-8B zeigen einen Elektrodenfilm 613 mit einer gleichmäßigen Schichtdicke, die durch korrekt ausgerichtete Quetschwalzen 201, 202 gemäß einer Ausführungsform erzeugt wird. Durch korrekt eingestellte Vorspanneinrichtungen 100 sind die beiden Quetschwalzen 201, 202 richtig ausgerichtet, sodass keine Nettoauslenkung vorliegt bzw. sich die im Walzenspalt vorliegenden Prozess- und Vorspannkräfteausgleichen, was zur Erzeugung eines Films 613 mit einer homogenen Dickenverteilung führt. Fig. 8B veranschaulicht den Weitertransport des Elektrodenfilms 613, welcher in einer Hauptförderrichtung mäandernd um die Walzen herum geführt wird.

Während des Betriebs werden die Quetschwalzen 201, 202 ausgelenkt, um den Film 613 einzustellen, der sich bildet, wenn die trockene Pulvermischung 905 durch den Walzenspalt 210 geführt wird. In einigen Ausführungsformen beträgt die Auslenkung der Walzenzapfen 205 etwa 5 µm, etwa 10 µm, etwa 15 µm, etwa 20 µm, etwa 25 µm, etwa 30 µm, etwa 35 µm, etwa 40 µm, etwa 45 µm, etwa 50 µm, ca. 55 µm, ca. 60 µm, ca. 65 µm, ca. 70 µm, ca. 75 µm, ca. 80 µm, ca. 85 µm, ca. 90 µm, ca. 95 µm oder ca. 100 µm, jeweils bezogen auf eine Walze mit einem Durchmesser von ca. 200 mm. Alternativ kann die Größe der Durchbiegung als Verhältnis ausgedrückt werden, das auf der Grundlage der Gesamtabmessung der Anpresswalze gewählt wird. In einer Ausführungsform beträgt das Durchbiegungsverhältnis etwa 2,5 x 10⁻⁵ bis etwa 0,0005, etwa 5 x 10⁻⁵ bis etwa 0,0005 oder etwa 7,5 x 10⁻⁵ bis etwa 0,0005, bezogen auf den Betrag der Auslenkung der Walze geteilt durch den Walzendurchmesser. Obwohl die oben genannten Werte auf der Grundlage einer Quetschwalze mit einem Durchmesser von 200 mm angegeben sind, ist der Durchmesser der Walze nicht so begrenzt.

Zusätzlich zum Betrag und der Richtung der Walzenauslenkung können die Quetschwalzen 201, 202 einzeln gesteuert werden, indem nur die Exzenterbuchsen gedreht werden, die mit jeder einzelnen Walze verbunden sind. Dadurch kann der Anwender den Abstand zwischen den Walzen und damit die Dicke der Folie, die zwischen den Walzen hindurchläuft, weiter steuern. Die Drehrichtung ist nicht begrenzt, und jede der Exzenterbuchsen kann 101, 102 separat um einen beliebigen Betrag gedreht werden. Darüber hinaus kann jedes einzelne Exzenterlager, das mit einer bestimmten Quetschwalze verbunden ist, eingestellt werden, was eine zusätzliche Kontrolle über die Durchbiegung jeder Walze ermöglicht.

In einigen Ausführungsformen haben die Quetschwalzen 201, 202 eine Bombierung, die dazu dient, die Genauigkeit und Präzision, die die Walzen auf einen Elektrodenfilm 613 ausüben, weiter zu erhöhen. Die Bombierung stellt sicher, dass die Kontaktfläche und damit das Filmprofil und die Filmdicke flach und genau bleiben, wenn die Walze ausgelenkt oder anderweitig manipuliert wird. Die Höhe der Bombierung ist nicht begrenzt und wird je nach den Anforderungen einer bestimmten Folie und der für jede Walze gewählten Durchbiegung ausgewählt. In einigen Ausführungsformen hat die Anpresswalze eine Bombierung von etwa 3 µm, etwa 4 µm, etwa 5 µm, etwa 6µm, etwa 7 µm, etwa 8 µm, etwa 9 µm, etwa 10 µm oder einen beliebigen Bereich der oben genannten Werte, wie etwa 3 µm bis etwa 10 µm, etwa 4 µm bis etwa 9µm oder etwa 4 µm bis etwa 8 µm.

Der Film 613, der durch die Quetschwalzen 201, 202 gebildet wird, ist nicht beschränkt und kann ein Metall, ein Polymer, ein Papier, eine Keramik oder eine Mischung oder ein Laminat aus einem oder mehreren der oben genannten sein. In bestimmten Ausführungsformen wird der Film aus einem trockenen Pulver geformt, das dann als Teil einer Li-Ionen-Zelle geformt wird. Wenn der Film aus einem trockenen Pulver gebildet wird, wird sie zu einer Kathode oder einer Anode für den Bau von Batteriezellen geformt.

Neben der Einstellung des Walzenspalts 210 zwischen den Quetschwalzen 201, 202 zur Steuerung der Filmdicke können die Quetschwalzen 201 ,202 und die Vorspanneinrichtungen 100 auch zur Einstellung des Drucks verwendet werden, der auf den Film ausgeübt wird. Die Größe der Kraft, die von der ersten Quetschwalze 201 oder der zweiten Quetschwalze 202 aufgebracht wird und die allein auf die von den Exzenterlagern vorgenommenen Einstellungen zurückzuführen ist, kann ohne externe Strukturen oder Vorrichtungen bis zu etwa 75 kN, bis zu etwa 50 kN, bis zu etwa 25 kN, etwa 1 kN bis etwa 75 kN, etwa 1 kN bis etwa 50 kN, etwa 10 kN bis etwa 50 kN, etwa 10 kN bis etwa 40 kN, etwa 10 kN bis etwa 30 kN oder eine beliebige Kombination aus einem oder mehreren der vorgenannten Bereiche betragen. Auf diese Weise können die erste Quetschwalze 201 und die zweite Quetschwalze 202 jeweils unabhängig voneinander eingestellt werden und einen erheblichen Druck auf ein Pulver oder einen Film ausüben. Es wird davon ausgegangen, dass der vorgenannte Druck nur auf die von den Doppelexzentern 99 vorgenommenen Einstellungen zurückzuführen ist und dass der erste Walzenspalt 210 und der zweite Walzenspalt 210 jeweils zusätzliche Kraft auf der Grundlage anderer Strukturen in der Vorrichtung ausüben können.

Alternativ wird die Genauigkeit des Doppelexzenters 99 und der zugehörigen Quetschwalze 201, 202 an der Gleichmäßigkeit des Films 613 gemessen, der von der Quetschwalze 201, 202 gebildet wird. In einigen Ausführungsformen hat ein Kathoden- oder Anodenfilm, der durch die Quetschwalze 201, 202 gebildet wird, eine gemessene Dicke, die um nicht mehr als etwa 10 µm, nicht mehr als etwa 8 µm, nicht mehr als etwa 6 µm, nicht mehr als 4 µm, nicht mehr als etwa 3 µm, nicht mehr als etwa 2 µm, nicht mehr als etwa 1 µm, etwa 1-10 µm, etwa 1-8 µm, etwa 1-6 µm, etwa 1-4 µm, etwa 1-3 µm oder etwa 1-2 µm variiert. Die oben genannten Werte werden über die Breite der Folie gemessen, die für den Formfaktor der herzustellenden Batteriezelle erforderlich ist.

Für jeden der vorstehenden Absätze, in denen die Bombierung der Quetschwalze, die auf die Quetschwalzen ausgeübte Kraft und die Genauigkeit des Exzenterlagers und der zugehörigen Quetschwalzen, gemessen an der Gleichmäßigkeit der Folie, beschrieben werden, werden diese Werte wiederum in Bezug auf die Breite gemessen, die für den Formfaktor der Zellen, wie z. B. Li-Ionen-Zellen, erforderlich ist, die mit der Vorrichtung hergestellt werden sollen. Beispiele für Formfaktoren sind nicht beschränkt und umfassen zylindrische Zellen 10440 oder 1044 (10 mm Durchmesser und 44 mm Länge), 14500 oder 1450 (14 mm Durchmesser und 50 mm Länge), 16340 oder 1634 oder CR123A (16 mm Durchmesser und 34 mm Länge), 18650 oder 1865 (18 mm Durchmesser bei 65 mm Länge), 21700 oder 2170 (21 mm Durchmesser bei 70 mm Länge), 26650 oder 2665 (26 mm Durchmesser bei 65 mm Länge), 32650 oder 3265 (32 mm Durchmesser bei 65 mm Länge) und 4680 (46 mm Durchmesser bei 80 mm Länge). Prismen- und Pouchzellen sind ebenfalls denkbar, wobei es keine Begrenzung für die in Betracht gezogenen Abmessungen gibt.

Die offenbarte Vorrichtung kann ferner einen oder mehrere Positionssensoren umfassen, die mit den Exzenterlagern 99, den Quetschwalzen 201, 202 oder beiden verbunden sind. Die Positionssensoren bestimmen den Betrag der Drehung der exzentrischen Lager oder den Betrag der Drehung der Quetschwalzen und liefern ein digitales oder analoges Signal, das diesem Betrag der Drehung der Quetschwalzen oder der exzentrischen Lager entspricht. Solche Positionssensoren sind nicht beschränkt und umfassen potentiometrische Sensoren, kapazitive Positionssensoren oder optische Positionssensoren. Die optischen Positionssensoren können mit beliebigem Licht arbeiten, einschließlich ultraviolettem (UV), sichtbarem oder infrarotem Licht. In bestimmten Ausführungsformen ist das Licht, das für den optischen Positionssensor ausgewählt wird, ein Laser mit einer der vorgenannten Bandbreiten.

In noch anderen Ausführungsformen oder in Verbindung mit den vorgesehenen Positionssensoren können auch ein oder mehrere Schichtdickensensoren vorgesehen werden. Die Foliendickensensoren sind nicht beschränkt und umfassen optische Sensoren wie z. B. Lasersensoren. Die Foliendickensensoren bestimmen die Dicke der von den Anpresswalzen gebildeten Folie durch Messung der Foliendicke an mindestens einem Punkt der Folie. In einigen Ausführungsformen gibt es einen oder mehrere Foliendickensensoren, die so konfiguriert sind, dass sie die Dicke an mehreren Punkten über die Breite der Folie messen. Die Dickensensoren liefern ein digitales oder analoges Signal, das der Dicke der Folie entspricht.

Die Verwendung der Quetschwalzen 201, 202 und zugehörigen Komponenten der Offenbarung ist nicht beschränkt, aber bestimmte Verwendungen sind wünschenswert. In einigen Ausführungsformen werden Produktionslinien konstruiert, die die Quetschwalzen der Offenbarung zusammen mit verschiedenen anderen Komponenten, die dem Fachmann bekannt sind, enthalten. Die Quetschwalzen werden eingesetzt, um die Dicke der Folien, die in der gesamten Produktionslinie hergestellt werden, genau zu steuern. Beispiele für die Filme, die so konfiguriert sind, dass sie gebildet werden oder die die Quetschwalzen und die zugehörigen Komponenten der Offenbarung verwenden, umfassen einen oder mehrere Anodenfilme, Kathodenfilme, Separatorfilme, Stromkollektorfilme, Zwischenschichtfilme, Klebefilme, Primerfilme oder Laminate, die zwei oder mehrere der oben beschriebenen Filme umfassen.

Die offengelegten Quetschwalzen 201, 202 und zugehörigen Komponenten werden als nützlich für die Bildung von Filmen aus einem Pulver offengelegt, aber es gibt auch andere Anwendungen. Zum Beispiel ist es denkbar, dass die Quetschwalzen und die zugehörigen Komponenten Filme aus Flüssigkeiten oder nicht-Newtonschen Flüssigkeiten wie Schlämmen bilden können.

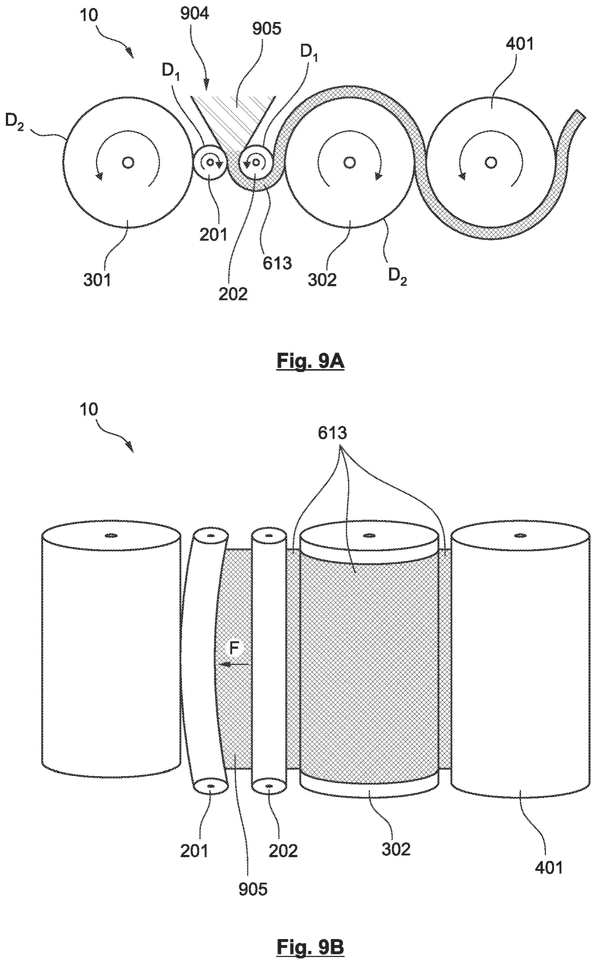

FIGS. 9A und 9B ist eine Darstellung einer besonders vorteilhaften Ausführungsform der Offenbarung. Gemäß FIG. 9A und 9B umfasst ein Kalander 10 eine erste Quetschwalze 201 und eine zweite Quetschwalze 202, die in unmittelbarer Nähe zu einem Pulvertrichter 904 angeordnet sind, um pulverförmiges Elektrodenmaterial 905 aufzunehmen. Ferner sind eine erste Stützwalze 301 und eine zweite Stützwalze302 an einer Seite der ersten Quetschwalze 201 und der zweiten Quetschwalze 202 angeordnet. Im Gebrauch wird das Elektrodenmaterial 905, bei dem es sich typischerweise um ein Pulver für eine Trockenelektrode handelt, durch die erste Quetschwalze 201 und die zweite Quetschwalze 202 komprimiert, wodurch ein Trockenelektrodenfilm 613 gebildet wird. Nach dem Durchlaufen und der Verformung durch den von der ersten Quetschwalze 201 und der zweiten Quetschwalze 202 ausgeübten Druck windet sich der Trockenelektrodenfilm 613 um die erste Kalanderwalze 302 und die zweite Kalanderwalze 401. Während der Bewegung des trockenen Elektrodenfilms 613 wird dieser komprimiert und übt eine gleiche und entgegengesetzte Kraft auf die erste Anpresswalze 201 und die zweite Anpresswalze 202 aus. Die erste Quetschwalze 201 und die zweite Quetschwalze 202 sind jedoch aufgrund von Reibungsunterschieden unterschiedlichen Kräften ausgesetzt. Im gezeigten Beispiel erfährt die erste Quetschwalze 201 erfährt somit eine Durchbiegung und muss durch die Vorspanneinrichtung 100 (nicht dargestellt) entsprechend vorgespannt werden. Die zweite Quetschwalze 202 ist von der Trockenelektrode 613 umgeben und weist wie dargestellt keine Durchbiegung auf. Die zweite Quetschwalze 202 muss daher nicht in dem Maße nachgestellt werden, wie es bei der ersten Quetschwalze 201 erforderlich ist.

Daher werden in dem hier beschriebenen und in FIG. 9B dargestellten Beispiel die erste Quetschwalze 201 und die zweite Quetschwalze 202 durch eine oder mehrere Vorspanneinrichtungen 100 so eingestellt, dass die Größe der Einstellkraft, die auf die erste Quetschwalze 201 ausgeübt wird, größer ist als die Größe der Einstellkraft, die auf die zweite Quetschwalze 202 ausgeübt wird. Dementsprechend ist ein gleichmäßiger und genau kontrollierter Spalt zwischen der ersten Quetschwalze 201 und der zweiten Quetschwalze 202 gewährleistet, während der trockene Elektrodenfilm 613 durchläuft.

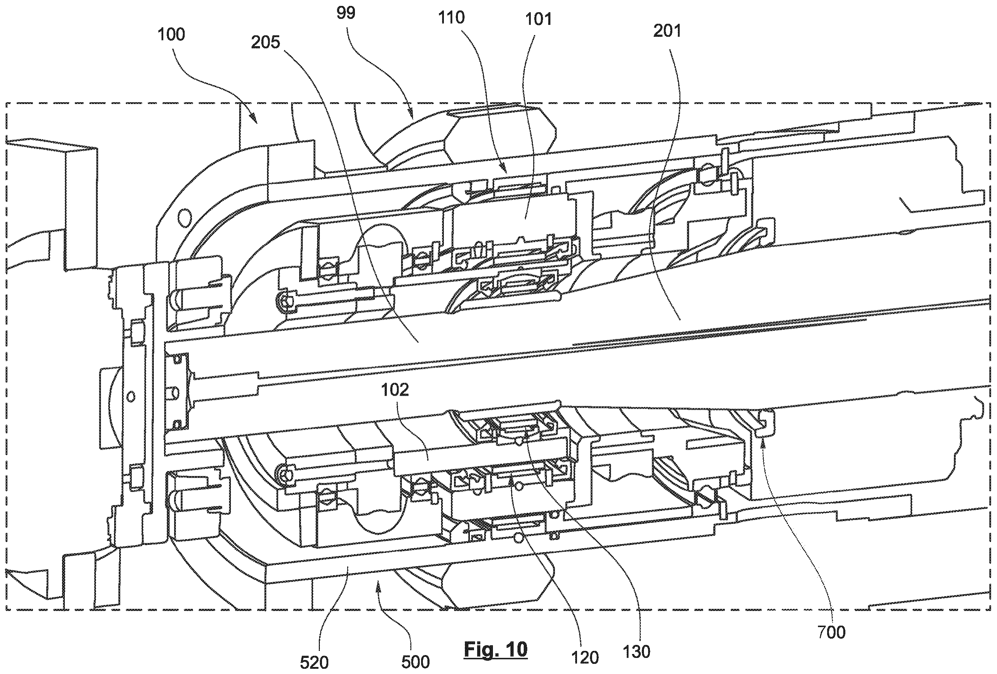

FIG. 10 zeigt eine Schnittansicht durch eine Quetschwalze 201 und eine am Walzenzapfen 205 der Quetschwalze 201 montierte Vorspanneinrichtung 100. Die Walze 201 ist mittels eines Walzenlagers 700 in einem Maschinenrahmen 500 gelagert. Der Maschinenrahmen weist stirnseitig der Walze 201, 202 ferner eine Bohrung 520 mit darin aufgenommener Zylinderbuchse auf, in welcher der Walzenzapfen 205 der Quetschwalze 201, 202 aufgenommen und in der Vorspanneinrichtung 100 gelagert ist. Die Vorspanneinrichtung 100 umfasst einen Doppelexzenter 99, welcher im Wesentlichen aus einer inneren Exzenterbuchse 102 und einer äußeren Exzenterbuchse 101 besteht. Die innere Exzenterbuchse 102 ist dabei in die äußere Exzenterbuchse 101 eingesteckt, so dass diese sich abschnittsweise überlappen. Die äußere Exzenterbuchse 101 ist über ein erstes Radiallager 110 gegenüber der Zylinderbuchse axial drehbar gelagert. Die innere Exzenterbuchse 102 ist gegenüber der äußeren Exzenterbuchse 101 über ein zweites axial drehbares Radiallager 120 gelagert. Der Walzenzapfen 205 ist wiederum über ein drittes Radiallager 130 axial drehbar gegenüber der inneren Exzenterbuchse 102 gelagert. In der dargestellten Ausrichtung befindet sich der Doppelexzenter 99 in seiner Ausgangsposition, in der der dicke Abschnitt der äußeren Exzenterbuchse an den dünnen Abschnitt der inneren Exzenterbuchse 102 angenähert ist und der dünne Abschnitt der äußeren Exzenterbuchse 101 an den dicken Abschnitt der inneren Exzenterbuchse 102 angenähert ist, so dass der Walzenzapfen zentriert und nicht ausgelenkt ist. Die Exzenterbuchsen 101 und 102 sind unabhängig voneinander mittels separater Drehvorrichtungen verstellbar. Zum Erzeugen einer definierten Walzenbiegung in der Walzenmitte wird der Doppelexzenter 99 mit dem darin aufgenommenen Walzenzapfen 205 gegenüber der Walzenlagerung 700 ausgelenkt, so dass der Abstand zwischen Doppelexzenter 99 und Walzenlagerung 700 als Hebelarm fungiert.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

Weitere vorteilhafte Ausführungsformen werden anhand der nachfolgenden Klauseln beschrieben:
1. Kalander (10) zur Herstellung eines Elektrodenfilms (613) aus einem pulverförmigen Elektrodenvorläufermaterial (905),
   mit zumindest einer ersten und einer zweiten, gegenläufig zur ersten rotierenden, Quetschwalze (201, 202), zwischen welchen ein Walzenspalt (210) ausgebildet ist, wobei der Kalander (210) dazu eingerichtet ist, das pulverförmige Elektrodenvorläufermaterial (605) beim Hindurchführen durch den Walzenspalt (210) mit Scherkräften zu beaufschlagen und dabei einen Elektrodenfilm (613) auszubilden,
   dadurch gekennzeichnet, dass zumindest eine der ersten oder zweiten Quetschwalze (201, 202) zumindest eine Vorspanneinrichtung (100) zum Vorspannen der Quetschwalze (201, 202) gegen einen im Walzenspalt (210) durch den Komprimiervorgang erzeugten nichtaxialen, insbesondere radialen und/oder tangentialen, auf die jeweilige Quetschwalze wirkenden Kraftvektor (F) aufweist, mittels welcher die Vorspannrichtung (100) und/oder die Größe der Vorspannkraft einstellbar ist.
2. Kalander (10) nach Klausel 1, wobei beide Quetschwalzen (201, 202) über ihre stirnseitigen Walzenzapfen (205) jeweils in einem Maschinenrahmen (500) gelagert sind, wobei die Vorspanneinrichtung (100) zumindest einer Lagerung (700) der ersten oder der zweiten Quetschwalze (201, 202) zugeordnet ist, wobei mittels der Vorspanneinrichtung (100) der Walzenzapfen (205) radial in eine beliebige Richtung und in einer einstellbaren Größenordnung bezogen auf die zumindest eine Lagerung (700) auslenkbar ist.
3. Kalander (10) nach Klausel 1 oder 2, wobei die Vorspanneinrichtung (100) einen Doppelexzenter (99) aufweist, wobei der Doppelexzenter (99) eine innere Exzenterbuchse (102) und eine äußere Exzenterbuchse (101) aufweist, welche unabhängig voneinander verdrehbar sind.
4. Kalander (10) nach Klausel 3, wobei die erste oder die zweite Quetschwalze (201, 202) drehbar in der inneren Exzenterbuchse (102) gelagert ist.
5. Kalander (10) nach einem der Klauseln 3 oder 4, wobei die äußere Exzenterbuchse (101) drehbar gegenüber einer im Maschinenrahmen (500) angeordneten Bohrung (520) gelagert ist, in welcher die Vorspanneinrichtung (100) aufgenommen ist.
6. Kalander (10) nach Klausel 5, wobei ein erstes Radiallager (110) zwischen der Bohrung (520) und der äußeren Exzenterbuchse (101) ausgebildet oder angeordnet ist.
7. Kalander (10) nach einem der Klauseln 3 bis 6, wobei ein zweites Radiallager (120) zwischen der äußeren Exzenterbuchse (101) und der inneren Exzenterbuchse (102) ausgebildet oder angeordnet ist.
8. Kalander (10) nach einem der Klauseln 3 bis 7, wobei ein drittes Radiallager (130) zwischen der inneren Exzenterbuchse (102) und dem Walzenzapfen (205) ausgebildet oder angeordnet ist.
9. Kalander (10) nach einem der Klausel 6 bis 8, wobei das erste und/oder das zweite und/oder das dritte Radiallager (110, 120, 130) als Zylinderrollenlager oder als Nadellager ausgebildet ist.
10. Kalander (10) nach einem der vorangehenden Klauseln, wobei angrenzend an die erste Quetschwalze (201) eine erste Stützwalze (301) und angrenzend an die zweite Quetschwalze (202) eine zweite Stützwalze (302) angeordnet sind, welche jeweils gegenläufig zu diesen rotieren.
11. Kalander (10) nach Klausel 10, wobei die Stützwalzen (301, 302) einen größeren Durchmesser (D2) als die erste und zweite Quetschwalze (201, 202) aufweisen.
12. Kalander (10) nach einem der Klauseln 10 oder 11, wobei die Achsen der Quetschwalzen (201, 202) und der Stützwalzen (301, 302) in einer Ebene zueinander ausgerichtet sind.
13. Kalander (10) nach einem der Klauseln 10 bis 12, wobei die erste Quetschwalze (201) und die erste Stützwalze (301) aufeinander abrollen und zwischen der zweiten Quetschwalze (202) und der zweiten Stützwalze (302) ein Walzenspalt (210) zum Hindurchführen des Elektrodenfilms (613) ausgebildet ist, wobei die zweite Quetschwalze (202) zum Herumführen des Elektrodenfilms (613) um die Ober- oder Unterseite der zweiten Quetschwalze (202) ausgebildet ist.
14. Kalander (10) nach einem der vorangehenden Klauseln, wobei oberhalb der Walzenspalts (210) zwischen der ersten und der zweiten Quetschwalze (201, 202) eine Vorrichtung (904) zum kontinuierlichen Fördern von pulverförmigem Elektrodenvorläufermaterial (905) in den Walzenspalt (210) angeordnet ist.
15. Kalander (10) nach einem der vorangehenden Klauseln, wobei zumindest eine der ersten oder zweiten Quetschwalze (201, 202) an ihren gegenüberliegenden Walzenzapfen (205) jeweils eine Vorspanneinrichtung (100) aufweist.
16. Kalander (10) nach einem der vorangehenden Klauseln, wobei sowohl die erste als auch die zweite Quetschwalze (201, 202) an ihren gegenüberliegenden Walzenzapfen (205) jeweils eine Vorspanneinrichtung (100) aufweisen.
17. Verfahren zum Herstellen eines eine homogene Dicke aufweisenden Elektrodenfilms (613) aus einem pulverförmigen Elektrodenvorläufermaterial (905), aufweisend die Schritte:
   Fördern von pulverförmigen Elektrodenvorläufermaterial (905) in einen von zwei Quetschwalzen (201, 202) ausgebildeten Walzenspalt (210);
   Hindurchführen des pulverförmigen Elektrodenvorläufermaterials (905) durch den Walzenspalt (210), wobei das pulverförmige Elektrodenvorläufermaterial (905) beim Hindurchführen durch den Walzenspalt (210) mit Scherkräften beaufschlagt wird, sodass ein Elektrodenfilm (613) ausgebildet wird;
   Beaufschlagen zumindest einer der zwei Quetschwalzen (201, 202) mit einer Vorspannung, um einem durch das Hindurchführen des pulverförmigen Elektrodenvorläufermaterials (905) durch den Walzenspalt (210) auf die jeweilige Quetschwalze resultierenden Kraftvektors (F) entgegenzuwirken.
18. Verfahren nach Klausel 17, wobei das Beaufschlagen mit einer Vorspannung das radiale Auslenken zumindest eines Walzenzapfens (205) der jeweiligen Quetschwalze (201, 202) umfasst.
19. Verfahren nach Klausel 18, wobei das radiale Auslenken des zumindest einen Walzenzapfens (205) das relative und/oder gleichförmige Verdrehen eines am Walzenzapfen (205) vorgesehen Doppelexzenters (99) umfasst.
20. Verfahren nach einem der Klauseln 18 oder 19, wobei das radiale Auslenken das Auslenken zweier gegenüberliegender Walzenzapfen (205) von zumindest einer der Quetschwalzen (201, 202) umfasst, wobei beide Walzenzapfen (205) radial in dieselbe Richtung ausgelenkt werden.
21. Verfahren nach einem der Klauseln 18 bis 20, wobei das radiale Auslenken das Auslenken jeweils zweier gegenüberliegender Walzenzapfen (205) beider Quetschwalzen (201, 202) umfasst, wobei die gegenüberliegenden Walzenzapfen (205) jeweils in dieselbe Richtung ausgelenkt werden und die Walzenzapfen (205) der ersten und der zweiten Quetschwalze (201, 202) in dieselbe oder in die diametral gegenüberliegende Richtung ausgelenkt werden.
22. Verfahren nach einem der Klauseln 17 bis 21, welches ferner umfasst: Abstützen der beiden Quetschwalzen (201, 202) jeweils auf den dem Walzenspalt (210) abgewandten Seiten der Quetschwalzen (201, 202) mittels einer jeweils radial auf die Quetschwalzen (201, 202) wirkenden Linienkraft.
23. Elektrodenfilm (613), welcher eine homogene Dicke aufweist, so dass die Dickenvariation des Elektrodenfilms (613) über seine Breite nicht mehr als 10 µm beträgt, erhältlich durch Hindurchführen eines pulverförmigen Elektrodenvorläufermaterials (905) durch einen zwischen einer ersten und einer zweiten Quetschwalze (201, 202) ausgebildeten Walzenspalt (210) und im Zuge dessen Beaufschlagen des pulverförmigen Elektrodenvorläufermaterials (905) mit Scherkräften, sodass ein Elektrodenfilm (613) ausgebildet wird, dabei Beaufschlagen zumindest einer der Quetschwalzen (201, 202) mit einer Vorspannung, um einem durch das Hindurchführen des pulverförmigen Elektrodenvorläufermaterials (905) durch den Walzenspalt (210) auf die jeweilige Quetschwalze (201, 202) resultierenden Kraftvektors (F) entgegenzuwirken.
24. Elektrodenfilm (613) nach Klausel 23, welcher einer oder mehrere von einem Anodenfilm, einem Kathodenfilm, einem Separatorfilm, einem Stromabhnehmerfilm, einem Zwischenschichtfilm, einem Klebefilm, einem Grundierungsfilm oder ein Laminat aus mehreren der vorgenannten Filme ist.

### Bezugszeichenliste

- 10: Kalander
- 100: Vorspanneinrichtung
- 99: Doppelexzenter
- 101: äußere Exzenterbuchse
- 102: innere Exzenterbuchse
- 110: erstes Radiallager
- 120: zweites Radiallager
- 130: drittes Radiallager
- 201: erste Quetschwalze
- 202: zweite Quetschwalze
- 205: Walzenzapfen
- 206: Kalandrierabschnitt
- 210: Walzenspalt
- 301: erste Stützwalze
- 302: zweite Stützwalze
- 303: Separatorfilm
- 401: Kalanderwalze
- 500: Maschinenrahmen
- 520: Bohrung
- 613: Elektrodenfilm
- 700: Walzenlagerung
- 904: Pulvertrichter
- 905: pulverförmiges Elektrodenvorläufermaterial
- D1: Walzendurchmesser
- D2: Stützwalzendurchmesser
- F: Kraftvektor
- X: Auslenkungsrichtung

## Patentansprüche

1. Kalander (10) zur Herstellung eines Films aus einem pulverförmigen Material, mit zumindest einer ersten und einer zweiten, gegenläufig zur ersten rotierenden, Quetschwalze (201, 202), zwischen welchen ein Walzenspalt (210) ausgebildet ist, wobei der Kalander (210) dazu eingerichtet ist, das pulverförmige Elektrodenvorläufermaterial (605) beim Hindurchführen durch den Walzenspalt (210) mit einer Kompression und/oder Scherkräften zu beaufschlagen und dabei einen Elektrodenfilm (613) auszubilden, wobei
zumindest eine der ersten oder zweiten Quetschwalze (201, 202) zumindest eine Vorspanneinrichtung (100) zum Vorspannen der Quetschwalze (201, 202) gegen einen Kraftvektor (F) aufweist, mittels welcher die Vorspannrichtung (100) und/oder die Größe der Vorspannkraft einstellbar ist.

2. Kalander (10) nach Anspruch 1, wobei
der Film ein Elektrodenfilm (613) ist und das pulverförmige Material ein pulverförmiges Elektrodenvorläufermaterial (905) ist, und/oder
der Kraftvektor (F) ein im Walzenspalt (210) durch den Komprimiervorgang erzeugter nichtaxialer, insbesondere radialer und/oder tangentialer, auf die jeweilige Quetschwalze wirkender Kraftvektor ist, und/oder
beide Quetschwalzen (201, 202) über ihre stirnseitigen Walzenzapfen (205) jeweils in einem Maschinenrahmen (500) gelagert sind, wobei die Vorspanneinrichtung (100) zumindest einer Lagerung (700) der ersten oder der zweiten Quetschwalze (201, 202) zugeordnet ist, wobei mittels der Vorspanneinrichtung (100) der Walzenzapfen (205) radial in eine beliebige Richtung und in einer einstellbaren Größenordnung bezogen auf die zumindest eine Lagerung (700) auslenkbar ist.

3. Kalander (10) nach Anspruch 1 oder 2, wobei die Vorspanneinrichtung (100) einen Doppelexzenter (99) aufweist, wobei der Doppelexzenter (99) eine innere Exzenterbuchse (102) und eine äußere Exzenterbuchse (101) aufweist, welche unabhängig voneinander verdrehbar sind, wobei optional die erste oder die zweite Quetschwalze (201, 202) drehbar in der inneren Exzenterbuchse (102) gelagert ist und/oder wobei die äußere Exzenterbuchse (101) drehbar gegenüber einer im Maschinenrahmen (500) angeordneten Bohrung (520) gelagert ist, in welcher die Vorspanneinrichtung (100) aufgenommen ist, wobei optional ein erstes Radiallager (110) zwischen der Bohrung (520) und der äußeren Exzenterbuchse (101) ausgebildet oder angeordnet ist.

4. Kalander (10) nach Anspruch 3, wobei ein zweites Radiallager (120) zwischen der äußeren Exzenterbuchse (101) und der inneren Exzenterbuchse (102) ausgebildet oder angeordnet ist.

5. Kalander (10) nach einem der Ansprüche 3 oder 4, wobei ein drittes Radiallager (130) zwischen der inneren Exzenterbuchse (102) und dem Walzenzapfen (205) ausgebildet oder angeordnet ist.

6. Kalander (10) nach einem der Ansprüche 3 bis 5, wobei das erste und/oder das zweite und/oder das dritte Radiallager (110, 120, 130) als Zylinderrollenlager oder als Nadellager ausgebildet ist.

7. Kalander (10) nach einem der vorangehenden Ansprüche, wobei angrenzend an die erste Quetschwalze (201) eine erste Stützwalze (301) und angrenzend an die zweite Quetschwalze (202) eine zweite Stützwalze (302) angeordnet sind, welche jeweils gegenläufig zu diesen rotieren, wobei optional die Stützwalzen (301, 302) einen größeren Durchmesser (D2) als die erste und zweite Quetschwalze (201, 202) aufweisen und/oder wobei die Achsen der Quetschwalzen (201, 202) und der Stützwalzen (301, 302) in einer Ebene zueinander ausgerichtet sind und/oder wobei die erste Quetschwalze (201) und die erste Stützwalze (301) aufeinander abrollen und zwischen der zweiten Quetschwalze (202) und der zweiten Stützwalze (302) ein Walzenspalt (210) zum Hindurchführen des Elektrodenfilms (613) ausgebildet ist, wobei die zweite Quetschwalze (202) zum Herumführen des Elektrodenfilms (613) um die Ober- oder Unterseite der zweiten Quetschwalze (202) ausgebildet ist.

8. Kalander (10) nach einem der vorangehenden Ansprüche, wobei oberhalb des Walzenspalts (210) zwischen der ersten und der zweiten Quetschwalze (201, 202) eine Vorrichtung (904) zum kontinuierlichen Fördern von pulverförmigem Elektrodenvorläufermaterial (905) in den Walzenspalt (210) angeordnet ist und/oder wobei zumindest eine der ersten oder zweiten Quetschwalze (201, 202) an ihren gegenüberliegenden Walzenzapfen (205) jeweils eine Vorspanneinrichtung (100) aufweist und/oder wobei sowohl die erste als auch die zweite Quetschwalze (201, 202) an ihren gegenüberliegenden Walzenzapfen (205) jeweils eine Vorspanneinrichtung (100) aufweisen.

9. Verfahren zum Herstellen eines eine homogene Dicke aufweisenden Elektrodenfilms (613) aus einem pulverförmigen Elektrodenvorläufermaterial (905), aufweisend die Schritte: Fördern von pulverförmigen Elektrodenvorläufermaterial (905) in einen von zwei Quetschwalzen (201, 202) ausgebildeten Walzenspalt (210); Hindurchführen des pulverförmigen Elektrodenvorläufermaterials (905) durch den Walzenspalt (210), wobei das pulverförmige Elektrodenvorläufermaterial (905) beim Hindurchführen durch den Walzenspalt (210) mit Scherkräften beaufschlagt wird, sodass ein Elektrodenfilm (613) ausgebildet wird; Beaufschlagen zumindest einer der zwei Quetschwalzen (201, 202) mit einer Vorspannung, um einem durch das Hindurchführen des pulverförmigen Elektrodenvorläufermaterials (905) durch den Walzenspalt (210) auf die jeweilige Quetschwalze resultierenden Kraftvektors (F) entgegenzuwirken.

10. Verfahren nach Anspruch 9, wobei das Beaufschlagen mit einer Vorspannung das radiale Auslenken zumindest eines Walzenzapfens (205) der jeweiligen Quetschwalze (201, 202) umfasst, wobei optional das radiale Auslenken des zumindest einen Walzenzapfens (205) das relative und/oder gleichförmige Verdrehen eines am Walzenzapfen (205) vorgesehenen Doppelexzenters (99) umfasst.

11. Verfahren nach einem der Ansprüche 10, wobei das radiale Auslenken das Auslenken zweier gegenüberliegender Walzenzapfen (205) von zumindest einer der Quetschwalzen (201, 202) umfasst, wobei beide Walzenzapfen (205) radial in dieselbe Richtung ausgelenkt werden.

12. Verfahren nach einem der Ansprüche 10 bis 11, wobei das radiale Auslenken das Auslenken jeweils zweier gegenüberliegender Walzenzapfen (205) beider Quetschwalzen (201, 202) umfasst, wobei die gegenüberliegenden Walzenzapfen (205) jeweils in dieselbe Richtung ausgelenkt werden und die Walzenzapfen (205) der ersten und der zweiten Quetschwalze (201, 202) in dieselbe oder in die diametral gegenüberliegende Richtung ausgelenkt werden.

13. Verfahren nach einem der Ansprüche 9 bis 12, welches ferner umfasst: Abstützen der beiden Quetschwalzen (201, 202) jeweils auf den dem Walzenspalt (210) abgewandten Seiten der Quetschwalzen (201, 202) mittels einer jeweils radial auf die Quetschwalzen (201, 202) wirkenden Linienkraft.

14. Elektrodenfilm (613), welcher eine homogene Dicke aufweist, so dass die Dickenvariation des Elektrodenfilms (613) über seine Breite nicht mehr als 10 µm beträgt, erhältlich durch Hindurchführen eines pulverförmigen Elektrodenvorläufermaterials (905) durch einen zwischen einer ersten und einer zweiten Quetschwalze (201, 202) ausgebildeten Walzenspalt (210) und im Zuge dessen Beaufschlagen des pulverförmigen Elektrodenvorläufermaterials (905) mit Scherkräften, sodass ein Elektrodenfilm (613) ausgebildet wird, dabei Beaufschlagen zumindest einer der Quetschwalzen (201, 202) mit einer Vorspannung, um einem durch das Hindurchführen des pulverförmigen Elektrodenvorläufermaterials (905) durch den Walzenspalt (210) auf die jeweilige Quetschwalze (201, 202) resultierenden Kraftvektors (F) entgegenzuwirken.

15. Elektrodenfilm (613) nach Anspruch 14, welcher einer oder mehrere von einem Anodenfilm, einem Kathodenfilm, einem Separatorfilm, einem Stromabhnehmerfilm, einem Zwischenschichtfilm, einem Klebefilm, einem Grundierungsfilm oder ein Laminat aus mehreren der vorgenannten Filme ist.
